# EUROPEAN PATENT SPECIFICATION

(11) **EP 1 767 100 B1**
(45) Date of publication and mention of the grant of the patent: **08.08.2012**
(21) Application number: 06121367.4
(22) Date of filing: 27.09.2006
(51) Int. Cl.: A23K 1/00, A23K 1/18, A23K 1/16

(54) **Feed for animals and method of fattening**
Tierfutter und Tiermastverfahren
Aliment pour animaux et méthode d'engraissement

(30) Priority: 27.09.2005 ES 200502332
(43) Date of publication of application: 28.03.2007
(73) Proprietor: Rabionet i Gubern, Josep, 17451 Sant Feliu de Buixadeu (ES)
(72) Inventor: Rabionet i Gubern, Josep, 17451 Sant Feliu de Buixadeu (ES)
(74) Representative: Pons Ariño, Angel

(56) References cited:
- EP-A- 1 308 095
- BE-A2- 899 977
- FR-A1- 2 768 025
- US-A- 3 424 587
- US-A- 5 110 592
- PETIT, H. V.,: "Digestion, milk production, milk composition, and blood composition of dairy cows fed whole flaxseed" JOURNAL OF DAIRY SCIENCE., vol. 85, 2002, pages 1482-1490, XP002410694 USAMERICAN DAIRY SCIENCE ASSOCIATION. CHAMPAIGN, ILLINOIS.
- FOCANT ET AL: "The effect of Vitamin E supplementation of cow diets containing rapeseed and linseed on the prevention of milk fat oxidation" JOURNAL OF DAIRY SCIENCE, AMERICAN DAIRY SCIENCE ASSOCIATION, SAVOY, IL, US, vol. 81, no. 4, 1998, pages 1095-1101, XP002167847 ISSN: 0022-0302
- CLINQUART, A., ISTASSE, L., DUFRASNE, I., MAYOMBO, A., VAN EENAEME, C., AND BIENFAIT, J.M.: "Effects on animal performance and fat composition of two fat concentrates in diets for growing-fattening bulls" ANIMAL PRODUCTION., vol. 53, 1991, pages 315-320, XP008072286 GBLONGMAN GROUP, HARLOW.
- DUFRASNE, I., GIELEN, M., ISTASSE, L., VAN EENAEME, C., GABRIEL, A., CLINQUART, A., AND BIENFAIT, J.M.: "Effets de l'incorporation de graines de lin floconnées sur support d'orge chez le taurillon à l'engraissment" ANNALES DE ZOOTECHNIE., vol. 40, 1991, pages 9-18, XP008072287 FRELSEVIER, PARIS
- KOUBA, M., ENSER, M., WHITTINGTON, F.M., NUTE, G.R., AND WOOD, J.D.: "Effect of a high-linoleic acid diet on lipogenic enzyme activities fatty acid composiution and meat quality in the growing pig" JOURNAL OF ANIMAL SCIENCE, vol. 81, 2003, pages 1967-1979, XP002410695 USNEW YORK, NY
- RAES,K., HAAK, L., BALCAEN, A., CLAEYS, E., DEMEYER, D., AND DE SMET, S.: "Effect of linseed feeding at similar linoleic acid levels in the fatty acid composition of double-muscled belgian blue young bulls" MEAT SCIENCE., vol. 66, 2004, pages 307-315, XP002410696 GBELSEVIER SCIENCE.
- DATABASE CABA [Online] 1973, BERG, R. VAN DER ET AL: "Prevention of chronic copper poisoning in sheep: adding molybdenum and sulphate to the concentrate feed Mogelijkheden ter preventie van chronische kopervergiftiging bij schapen; toevoeging van molybdeen en sulfaat aan het krachtvoeder" XP002410699 retrieved from STN Database accession no. 73:82267 & TIJDSCHRIFT VOOR DIERGENEESKUNDE, VOL. 98, NO. 7, PP. 328-334. ISSN: 0040-7453, 1973,
- DATABASE CABA [Online] 1994, DUFRASNE, I. ET AL: "Notes on the degradability of six feeds rich in fat in the rumen Notes sur la degradabilite dans le rumen de 6 aliments riches en matiere grasse" XP002410700 retrieved from STN Database accession no. 92:4458 & REVUE DE L'AGRICULTURE, VOL. 44, NO. 1, PP. 31-38. 14 REF. ISSN: 0776-2143, 1991,

## Description

This invention refers to an enriched feed, in particular a feed that comprises flax seed for animals that are primarily destined for human consumption.

### PREVIOUS STATE-OF-THE-ART

Fat is a mixture of lipids, especially triglycerides, although it is also composed of other biologically important components such as cholesterol, wax and phospholipids. Fat is one of the basic components of diet (along with carbohydrates and proteins) and the most efficient way for the human body to store energy, contributing 9 kilocalories for every gram of metabolised fat.

Fatty acids are the structural base of triglycerides since each triglyceride is composed of three fatty acids and one glycerol molecule.
We can differentiate between fatty acids by the length of the carbon atom chains or by the double links they possess. Using the latter of these criteria, fatty acids may be saturated (without double links in their structure), saturate (with one double link) or polyunsaturated (with two or more double links). The type of fatty acid which is predominant characterises the fat in general as saturated, unsaturated or polyunsaturated.

Cholesterol is a complex alcohol that is part of all animal fats and oils. When the cholesterol in the blood rises above certain levels considered to be normal, it can cause a disease known as hypercholesterolemia. A blood cholesterol level of 200 mg/dl or less is considered normal. In mild hypocholesterolemia cases, the cholesterol level is between 200 and 249 mg/dl; in moderate hypercholesterolemia, the values are between 250 and 299 mg/dl and in severe cholesterolemia, the values are in excess of 299 mg/dl. Cholesterol is the most important risk factor of ischemic cardiopathy. There is a close relationship between blood cholesterol levels, the levels of other fats or lipids and the development of arteriosclerosis. In this disease, the plates in the cholesterol are deposited on the artery walls, particularly small and medium ones, thereby reducing the interior diameter and the flow of blood. The complete blockage of arteries, such as that which occurs in coronary arteries and can cause a heart attack, takes place in the places where the arterial walls have hardened due to the effect of the plates.

While many foods, especially milk products and the fat from meat, contain cholesterol, the body also synthesise it from free substances in the body. However, research shows that a diet rich in cholesterol generates abnormally high levels of cholesterol and of the fats and lipids related to it. The tests show conclusively that people with high cholesterol levels are more likely to suffer from diseases such as arteriosclerosis or heart attack compared to people with low levels. Also significant is the fact that scientists have also identified two types of proteins that transport cholesterol in the blood called high and low density lipoproteins.

At this time, many animal feeds are used which are intended to improve the quality of the meat and increase production. Most of these feeds contain high quantities of animal and vegetable fats, which introduce molecules such as cholesterol and saturated fatty acid into the food chain, the consumption of which by animals and humans is not recommended.

However, the addition of such fats is widespread in the livestock industry and seems to be indispensable for maintaining the right meat and milk production levels.

One of the alternatives used for fattening animals and as a way to improve and reinforce the quality of the food products obtained from them consists in adding foods, by-products and substitutes of a marine origin with high eicosapentaenoic acid (EPA) and docosahexaenoic acid (DHA) contents to the feed.

However, this caused a negative alteration of the organoleptic properties of the food products, as did the feeds supplements with microalgae.

Another alternative contemplated was the use of flax as a food supplement, although it was not proven to be efficient for fattening since at high concentrations (flax concentrations > 2% of the total feed composition) it causes disorders in the animals' digestive tracts.

Clinquart (Animal Production 1991, 53, pp 315) and Dufrasne (Annales de Zootechnie 1991, 40, pp 9) disclose animal feeds comprising linseeds in the form of flakes. However, the content of wheat, barley and corn of those animal feeds is below 35%. Moreover, Clinquart teaches that the flaxseeds should be added always in the extruded form because this form increases the oil available to the animal whereas the oil of the flaxseeds in the form of flakes is not released.

It is therefore necessary to develop feed with low cholesterol and saturated fat contents that make it possible to maintain or improve the fattening rates and the production of milk in farm animals and the quality of their meat. Hence, by consuming these animals we would be indirectly reducing the levels of certain harmful substances in human blood, thus preventing serious diseases associated with this situation.

### DESCRIPTION OF THE INVENTION

The tests conducted for the development of this invention were initially intended to obtain feeds that would improve the fattening rates of farm animals. To achieve this objective, numerous feed compositions were tested which included diverse animal and vegetable fats combined with cereals and other additives such as antioxidants, salts, etc.

The results obtained from the initial tests did not yield the desired results, since significant increases in the fattening rates of the animals were not observed. Subsequently, tests were conducted with feeds in which the fats animal and vegetable fats were replaced with flax seed *(Linum usitatissimum)* in its different forms (flax seed in the form of flakes, extruded flax seed, linseed oil, linseed cakes). The results obtained were surprising, since the fattening rate of the animals increased significantly, when the feed was made with flax seed in the form of flakes.

Likewise, the feeds make with flax seed produced surprising results, since the increase in fattening rates was no linked to higher feed consumption; on the contrary, consumption was reduced. Furthermore, improvements in the production and quality of the milk were observed and progress in the quality of the meat (juiciness, flavour, colour, duration), due to a decrease in the amount of peripheral fat and an increase in the amount of infiltrated fat.

Thus, the first aspect of this invention provides a feed which improve the quality of the meat and milk, the production of milk and fattening rates in animals, the composition of which comprises flax seed in the form of flakes. In a preferred embodiment of this aspect of the invention, the proportion of linseed or its derivatives is at least 3% of the total feed composition, preferably between 3% and 12%, even more preferably between 5% and 9%, and even more preferably between 5.5% and 7%.

In another preferred embodiment of this aspect of the invention, the feed comprises at least one antioxidant agent, preferably vitamin E (tocopherol) in a proportion of at least 0.01% of the total feed composition, preferably between 0.01 % and 0.1 %.

The feed comprises corn, barley, wheat, derivatives or combinations thereof in a proportion between 55% and 85%.

In another preferred embodiment of this aspect of the invention, the feed comprises soy or soy derivatives (e.g. soy cake), preferably in a proportion of at least 5% of the total feed composition and more preferably between 10 and 35%.

In a preferred embodiment of this aspect of the inventions the feed does not comprise:
a. Animal fat,
b. Vegetable fat
c. Derivatives of a or b, or
d. Combinations of a, b or c.

A second aspect of this invention is related to the methods for improving the quality of meat and milk, increasing milk production and fattening animals, which consisting of administering the feed of the invention to the animals.

The invention is however defined by the claims.

### Definitions

Feed: food composition for animal consumption which may include but is not limited to corn, barley, wheat, sorghum, oats, rye, beans, peas, integral soy, soy cake, sunflower cake, coconut cake, millet, soybean husks, dehydrated alfalfa, alfalfa hay, carob bean, beetroot pulp, fruit pulp, vegetable oils, animal fats, protected fats (by-pass), milk products, sugar cane molasses, beetroot, derivatives or a combination thereof.

The feeds may also be supplemented with substances that reinforce their nutritional properties and quality. Such substances comprise but are not limited to marine microalgae, substances of a marine origin, bicalcium phosphate, calcium carbonate, calcium bicarbonate, salt, magnesium oxide, polyvitaminic concentrates, minerals or any other type of mineral or microingredient, essential amino acids such as lysine, methionine, tryptophan, threonine, and derivatives or combinations thereof.

### DETAILED EXPLANATION OF THE INVENTION

The investigators of this invention have developed a feed which improves the quality of meat and milk and increases fattening rates in animals but decreases feed consumption and also increase milk production. To obtain these results, it was necessary to add flax seed in its different forms to the feed, although the most surprising results were obtained when the flax seed was added in the form of previously treated flakes. Furthermore, of particular interest is the fact that the feed was prepared without using animal and vegetable fats.

To supplement the feed, the flax seed must be processed to eliminate the anti-nutritional factors (phytic acid, cyanogenic glucosides such as linamarin, phytoestrogens, etc.), i.e., the substances that can affect the animals' health. These substances present in unprocessed flax seed are eliminated through different processes, thus increasing its digestibility by deactivating the anti-nutritional factors that have negative effects on the digestive tracts of the animals that consume them.

To improve the properties of the feed and the methods of using the feed, antioxidants such as vitamin E are added to it. These antioxidants prevent the oxidation of the polyunsaturated fatty acids, such as the alpha linolenic acid (found in abundance in flax seeds), which are highly susceptible to oxidation due to the double links in their molecules. The antioxidants thus improve the quality of the meat product by reducing the oxidation levels of the fatty acids and cholesterol and stabilising the characteristic bright red colour of fresh meat by preventing the oxidation of the myoglobin to metamyoglobin (with would cause the meat to turn grey).

Hence, the feed of the invention increases the quality of the meat by optimising its juiciness, flavour and organoleptic properties since the polyunsaturated fats (linoleic acid) from the flax has a lower flashpoint that saturate fat.

Furthermore, thanks to the new properties of the meat mentioned above, the maturation process is optimised, decreasing the period and thereby increasing the possibility of consuming meat at its freshest and with all of its nutritional properties intact.

The tables below pertain to a series of comparative studies which show the improvements which the consumption of the invention have on fattening, milk production, etc.

**Table 1.**

| | **ZOOTECHNICAL EFFECTS** | | |
|---|---|---|---|
| | **Parameter under study** | | |
| | Kgs of feed (from weaning to slaughter) | | |
| | | | |
| | Feed consumption (Kg) | Feed consumption (Kg) | |

| **ANIMAL SPECIES** | **Feed of the invention** | **Market feed** | **Percentage increase** |
|---|---|---|---|
| | | | |
| **White pork** | 225 Kg | 265 Kg | 15% less Feed consumption |
| **Iberian pork** | 450 Kg | 750 Kg | 40% less Feed consumption |
| **Beef** | 1250 Kg | 1750 Kg | 28% less Feed consumption |

This table shows a significant decrease in the amount of feed consumed by different animal groups to whom the feed of the invention was administered. The animals that were given commercial feed consumed between 15% and 40% more feed than the animals that were given the feed of the invention.

**Table 2.**

| | **ZOOTECHNICAL EFFECTS** | | |
|---|---|---|---|
| | **Parameter under study** | | |
| | TIME ON FARM UNTIL SLAUGHTERED | | |
| | | | |
| | From birth until slaughter | From birth until slaughter | |

| **ANIMAL SPECIES** | **Feed of the invention** | **Market feed** | **Percentage increase** |
|---|---|---|---|
| | | | |
| **White pork** | 5 months and 1 week (105 Kg live) | 6 months and 1 week (105 Kg. live weight) | Remained 20% less time on farm |
| **Iberian pork** | 8 - 9 months (150 Kg. live weight) | 12 months (150 Kg live weight) | Remained 25% less time on farm |
| **Beef** | 10 months (235 Kg) | 12 months (235Kg) | Remained 16% less time on farm |

This table shows how the feed of the invention produces a notable decrease in all species (white pork, Iberian pork and beef) of the fattening time until slaughter. The fattening times were reduced by 16% to 25% for animals that were given the feed of the invention.

**Table 3.**

| | **Parameter under study** | | |
|---|---|---|---|
| | QUANTITY-QUALITY OF MOTHER'S MILK | | |
| | | | |
| | Days of lactation | Days of lactation | |

| **ANIMAL SPECIES** | **Feed of the invention** | **Market feed** | **Percentage increase** |
|---|---|---|---|
| | | | |
| White pork | 15 | 21 | 28% fewer days of lactation |
| Iberian pork | 15 | 28 | 25% fewer days of lactation |
| Beef | 45 | 75 | 40% fewer days of lactation |

This table clearly shows how the lactations times in the young animals of the different species were significantly decreased when the mothers of these animals were given the feed of the invention. In fact, the lactation times were reduced between 25% and 40%, which is indicative of higher milk quality and increased milk production.

Below are different examples of embodiments of the invention which are meant to illustrate but not limit it.

### EXAMPLES OF THE EMBODIMENT OF THE INVENTION

### Example 1. Feed Composition

Several compositions for the feed of the inventions are given below. The first composition is a general one, while the rest are compositions especially intended for each type of animal or group of animals.

It is important to note that the flax concentrations in the compositions given below would vary depending on the species and ages of the animals for which the feed is intended. Generally speaking, the youngest animals will have a lower capacity to assimilate flax than older animals.

### 1.- General Quantitative Composition (%)

| | |
|---|---|
| Corn | 5 |
| Barley | 44 |
| Soy cake | 21.5 |
| FLAX FLAKES | 6 |
| Calcium carbonate | 0.61 |
| Bicalcium phosphate | 1.43 |
| Salt | 0.3 |
| Multivitamin and mineral corrector | 0.2 |
| Lysine | 0.19 |
| Methionine | 0.31 |
| Vitamin E | 0.15 |

### 2.- BOVINE (calves): for 100.35 Kg of feed

| | |
|---|---|
| Corn: | 36.3 kg |
| Barley: | 27.0 kg |
| Soy cake: | 17.0 kg |
| | |
| *FLAX SEED flakes: | 7.0 kg |
| Beetroot pulp: | 2.2 kg |
| Bicalcium phosphate: | 0.8 kg |
| Calcium carbonate: | 1.1 kg |
| Salt: | 0.4 kg |
| Soybean husks: | 8.0 kg |
| Vitamin/mineral corrector: | 0.2 kg |
| | |
| Vitamin E (α-TOCOPHEROL): | 35 g |

| | |
|---|---|
| * Amount varies between 3 Kg and 12 Kg | |

### 3.- OVINE (lambs) for 100.30 Kg of feed.

| | |
|---|---|
| Corn: | 5 kg |
| Barley: | 14 kg |
| Wheat: | 5 kg |
| Carob: | 7 kg |
| Soy cake: | 20 kg |
| *FLAX FLAKES: | 7 kg |
| Milk serum: | 10 kg |
| Calcium carbonate: | 1.4 kg |
| Salt: | 0.4 kg |
| Vitamin/mineral corrector: | 0.2 kg |
| VITAMIN E (α-TOCOPHEROL): | 30 g |

| | |
|---|---|
| *Amount varies between 1 kg. and 10 Kg. | |

### 4.- PORCINE (white hogs) for 100.25 kg of feed.

| | |
|---|---|
| Corn: | 39.2 kg |
| Barley: | 28.0 kg |
| Wheat flour: | 4.0 kg |
| Soy cake: | 21.0 kg |
| FLAX FLAKES*: | 5.5 kg |
| Bicalcium phosphate: | 0.9 kg |
| Calcium carbonate: | 0.9 kg |
| Salt: | 0.3 kg |
| Vitamin-mineral corrector: | 0.2 kg |
| VITAMIN E (α-TOCOPHEROL): | 25 g |

| | |
|---|---|
| * Amount varies between 3 kg and 12 kg | |

### 5.- PORCINE** (Iberian hogs) for 100.25 kg of feed.

| | |
|---|---|
| Corn: | 6.3 kg |
| Barley: | 40.0 kg |
| Wheat: | 20.0 kg |
| Wheat flour: | 8.0 kg |
| Soy cake: | 17.0 kg |
| FLAX FLAKES*: | 5.5 kg |
| Bicalcium phosphate: | 1.3 kg |
| Calcium carbonate: | 1.4 kg |
| Salt: | 0.3 kg |
| Vitamin-mineral corrector: | 0.2 kg |
| VITAMIN E (α-TOCOPHEROL) | 25 g |

| | |
|---|---|
| * Amount varies between 3 kg and 12 kg ** The percentage of flax in relation to the rest of the components of the feed varies depending on the animal's age and weight. This composition is especially recommended for animals after weaning that weigh between 15 and 30 Kg. | |

### 6.- PORCINE (Iberian hogs) for 100.25 kg of feed.

| | |
|---|---|
| Corn: | 29.3 kg |
| Barley: | 24.0 kg |
| Wheat: | 20.0 kg |
| Wheat flour: | 8.0 kg |
| Soy cake: | 10.0 kg |
| FLAX FLAKES*: | 5.5 kg |
| Bicalcium phosphate: | 1.3 kg |
| Calcium carbonate: | 1.4 kg |
| Salt: | 0.3 kgs. |
| Vitamin-mineral corrector: | 0.2 kg |
| VITAMIN E (α-TOCOPHEROL) | 25 g |

| | |
|---|---|
| * Amount varies between 3 kg and 12 kg **The percentage of flax in relation to the rest of the components of the feed varies depending on the animal's age and weight. This composition is especially recommended for animals after weaning that weigh more than 30 Kg. | |

### 7.- POULTRY (chicken) for 100.25 kg of feed.

| | |
|---|---|
| Corn: | 60.0 kg |
| Soy cake: | 31.6 kg |
| Bicalcium phosphate: | 1.3 kg |
| FLAX FLAKES*: | 6.0 kg |
| Calcium carbonate: | 0.6 kg |
| Salt: | 0.2 kg |
| Vitamin-mineral corrector: | 0.3 kg |
| VITAMIN E (α-TOCOPHEROL): | 25 g |

| | |
|---|---|
| * Amount varies between 3 kg and 12 kg | |

### EXAMPLE 2.- Procedure for obtaining flax seed in the form of flakes:

1. The flax seeds are cooked, preferably steamed, at a water temperature in excess of 80ºC, preferably within a temperature range of 80 and 100ºC and more preferably between 90 and 95 ºC.
2. The flax seeds are mashed using any method, preferably mashing the seeds with cylinders.
3. The flax seeds are dried using any method suitable for achieving that end, preferably by the injection of dry air to reduce the humidity in the seeds.
4. The seeds are cooled using any method suitable for bringing them to an ideal storage temperature.

## Claims

1. Animal feed comprising flax seeds or flax seed derivatives, **characterised in that** the flax seeds are in the form of flakes, cereals or cereal derivatives in a proportion between 55% and 85% of the total composition, and the cereal or cereal derivatives it comprises belong to the following group:
a. Corn,
b. Barley
c. Wheat
d. Corn, wheat or barley derivatives or combinations thereof or
e. Combinations of a, b, c or d.

2. Animal feed according to claim 1 **characterised in that** the proportion of flax seed is at least 3% of the total composition.

3. Animal feed according to claim 2 **characterised in that** the proportion of flax is between 3% and 12% of the total composition.

4. Animal feed according to any of the previous claims **characterised in that** it also comprises at least one antioxidant.

5. Animal feed according to the previous claim **characterised in that** the proportion of antioxidant is at least 0.01 % of the total composition.

6. Animal feed according to the previous claim **characterised in that** the proportion of antioxidant is between 0.01% and 0.1 % of the total composition.

7. Animal feed according to claims 4-6 where the antioxidant agent is Vitamin E. 30

8. Animal feed according to any of the previous claims characterised it comprises soy or soy derivatives in a proportion of at least 5% of the total composition.

9. Animal feed according to the previous claim characterised it comprises soy or soy derivatives in a proportion between 10% and 35% of the total composition.

10. Fattening method for animals that comprises the administration of the animal feed according to any of claims 1-9 to such animals.

11. Fattening method for animals to improve meat quality that comprises the administration of the animal feed according to any of claims 1-9 to such animals.

12. Method for increasing milk production in animals that comprises the administration of the animal feed according to any of claims 1-9 to such animals.

## Patentansprüche

1. Tierfutter, das Leinsamen oder Leinsamenderivate umfasst, **dadurch gekennzeichnet, dass** die Leinsamen in der Form von Flocken, Getreide oder Getreidederivaten in einem Verhältnis von 55 % und 85 % der Gesamtzusammensetzung vorliegen und dass das darin enthaltene Getreide oder die Getreidederivate zu den folgenden Gruppen gehören:
a. Mais
b. Gerste
c. Weizen
d. Mais-, Weizen- oder Gerstenderivate bzw. eine Kombination derselben oder
e. Kombinationen von a, b, c oder d.

2. Tierfutter nach Anspruch 1, **dadurch gekennzeichnet, dass** der Anteil des Leinsamens an der Gesamtzusammensetzung mindestens 3 % beträgt.

3. Tierfutter nach Anspruch 2, **dadurch gekennzeichnet, dass** der Anteil des Leinsamens an der Gesamtzusammensetzung zwischen 3 % und 12 % beträgt.

4. Tierfutter nach irgendeinem der vorherigen Ansprüche, **dadurch gekennzeichnet, dass** dieses außerdem mindestens ein Antioxidationsmittel enthält.

5. Tierfutter nach dem vorherigen Anspruch, **dadurch gekennzeichnet, dass** der Anteil des Antioxidationsmittels an der Gesamtzusammensetzung mindestens 0,01 % beträgt.

6. Tierfutter nach dem vorherigen Anspruch, **dadurch gekennzeichnet, dass** der Anteil des Antioxidationsmittels an der Gesamtzusammensetzung zwischen 0,01 % und 0,1 % beträgt.

7. Tierfutter nach den Ansprüchen 4-6, bei dem es sich bei dem Antioxidationsmittel um Vitamin E. 30 handelt.

8. Tierfutter nach irgendeinem der vorherigen Ansprüche, **dadurch gekennzeichnet, dass** dieses Soja oder Sojaderivate enthält, deren Anteil an der Gesamtzusammensetzung mindestens 5 % beträgt.

9. Tierfutter nach dem vorherigen Anspruch, **dadurch gekennzeichnet, dass** dieses Soja oder Sojaderivate enthält, deren Anteil an der Gesamtzusammensetzung zwischen 10 % und 35 % beträgt.

10. Methode zur Mästung von Tieren, welche die Verabreichung des Tierfutters nach irgendeinem der Ansprüche 1-9 an diese Tiere einschließt.

11. Methode zur Mästung von Tieren zur Verbesserung der Fleischqualität, welche die Verabreichung des Tierfutters nach irgendeinem der Ansprüche 1-9 an diese Tiere einschließt.

12. Methode zur Erhöhung der Milchproduktion von Tieren, welche die Verabreichung des Tierfutters nach irgendeinem der Ansprüche 1-9 an diese Tiere einschließt.

## Revendications

1. Aliment pour animaux comprenant des graines de lin ou des dérivés de graines de lin, **caractérisé en ce que** les graines de lin se présentent sous la forme de flocons, des céréales ou des dérivés de céréales dans une proportion comprise entre 55% et 85% de la composition totale, et les céréales ou les dérivés de céréales qu'il comprend appartiennent au groupe suivant :
a. Maïs
b. Orge
c. Blé
d. Dérivés de maïs, de blé ou d'orge ou leurs combinaisons ou
e. Combinaisons de a, b, c ou d.

2. Aliment pour animaux selon la revendication 1, **caractérisé en ce que** la proportion de graines de lin représente au moins 3% de la composition totale.

3. Aliment pour animaux selon la revendication 2, **caractérisé en ce que** la proportion de lin est comprise entre 3% et 12% de la composition totale.

4. Aliment pour animaux selon n'importe laquelle des revendications précédentes, **caractérisé en ce qu'**il comprend également au moins un antioxydant.

5. Aliment pour animaux selon la revendication précédente, **caractérisé en ce que** la proportion d'antioxydant représente au moins 0,01% de la composition totale.

6. Aliment pour animaux selon la revendication précédente, **caractérisé en ce que** la proportion d'antioxydant est comprise entre 0,01% et 0,1% de la composition totale.

7. Aliment pour animaux selon les revendications 4-6, dans lequel l'agent antioxydant est la vitamine E.30.

8. Aliment pour animaux selon n'importe laquelle des revendications précédentes, **caractérisé en ce qu'**il comprend du soja ou des dérivés de soja dans une proportion au moins égale à 5% de la composition totale.

9. Aliment pour animaux selon la revendication précédente, **caractérisé en ce qu'**il comprend du soja ou des dérivés de soja dans une proportion comprise entre 10% et 35% de la composition totale.

10. Méthode d'engraissement des animaux qui comprend l'administration à ces animaux de l'aliment pour animaux selon n'importe laquelle des revendications 1-9.

11. Méthode d'engraissement des animaux pour améliorer la qualité de la viande qui comprend l'administration à ces animaux de l'aliment pour animaux selon n'importe laquelle des revendications 1-9.

12. Méthode pour accroître la production de lait chez les animaux qui comprend l'administration à ces animaux de l'aliment pour animaux selon n'importe laquelle des revendications 1-9.
